# EUROPEAN PATENT APPLICATION

(11) **EP 4 579 412 A1**
(43) Date of publication of application: **02.07.2025**
(21) Application number: 23856883.6
(22) Date of filing: 31.03.2023
(51) Int. Cl.: G06F 3/04815, G06F 3/04812, G06F 3/04845

(54) **INFORMATION PROCESSING DEVICE, INFORMATION PROCESSING SYSTEM, AND PROGRAM**

(30) Priority: 24.08.2022 US 202263373355 P
(71) Applicant: Sony Group Corporation, Tokyo 108-0075 (JP)
(72) Inventor: TOYOSHIMA Kenichiro, Tokyo 108-0075 (JP); SAKAKURA Ryo, Tokyo 108-0075 (JP); OHTA Yoshiyuki, Tokyo 108-0075 (JP)
(74) Representative: 2SPL Patentanwälte PartG mbB
(86) International application number: PCT/JP2023/013479
(87) International publication number: WO 2024/042763

(57) **Abstract**

The present technology relates to an information processing apparatus, an information processing system, and a program that allows a GUI to be suitably operated.

An information processing apparatus of the present technology includes a video generation unit configured to generate a video including a 3D object and a GUI having at least three planes arranged in a virtual space, the video including the 3D object in which one portion is cut out along a plane of the GUI in a case where the 3D object and the GUI overlap in the virtual space. The present technology can be applied to, for example, an information processing apparatus that controls display of a spatial reproduction display.

## Description

### TECHNICAL FIELD

The present technology relates to an information processing apparatus, an information processing system, and a program, and more particularly, to an information processing apparatus, an information processing system, and a program capable of suitably operating a GUI.

### BACKGROUND ART

A video representing a 3D object having a three-dimensional shape is generally displayed. For example, Patent Document 1 describes a technology for displaying stereo content arranged in a virtual space so as to enable stereoscopic viewing.

### CITATION LIST

### PATENT DOCUMENT

PATENT DOCUMENT 1: WO 2019/044188 A

### SUMMARY OF THE INVENTION

### PROBLEMS TO BE SOLVED BY THE INVENTION

In a case where the 3D object itself, a graphical user interface (GUI) for controlling display of the 3D object, or the like is operated, it is effective to use an input device that can be moved in a three-dimensional direction in a real space. However, the user needs to keep gripping the input device in midair, which increases fatigue.

The present technology has been made in view of such a situation, and enables a GUI to be suitably operated.

### SOLUTIONS TO PROBLEMS

An information processing apparatus according to a first aspect of the present technology includes a video generation unit configured to generate a video including a 3D object and a GUI having at least three planes arranged in a virtual space, the video including the 3D object in which one portion is cut out along a plane of the GUI in a case where the 3D object and the GUI overlap in the virtual space.

A program according to a first aspect of the present technology causes a computer to execute a process of generating a video including a 3D object and a GUI having at least three planes arranged in a virtual space, the video including the 3D object in which one portion is cut out along a plane of the GUI in a case where the 3D object and the GUI overlap in the virtual space.

An information processing system according to a second aspect of the present technology includes an information processing apparatus including a video generation unit that generates a video including a 3D object and a GUI having at least three planes arranged in a virtual space, the video including the 3D object in which one portion is cut out along a plane of the GUI in a case where the 3D object and the GUI overlap in the virtual space; and a display device that is connected to the information processing apparatus and includes a display unit that displays a video generated by the video generation unit.

In the first aspect of the present technology, a video including a 3D object and a GUI having at least three planes arranged in a virtual space is generated, the video including the 3D object in which one portion is cut out along a plane of the GUI in a case where the 3D object and the GUI overlap in the virtual space.

In the second aspect of the present technology, a video including a 3D object and a GUI having at least three planes arranged in a virtual space is generated by the information processing apparatus, the video including the 3D object in which one portion is cut out along a plane of the GUI in a case where the 3D object and the GUI overlap in the virtual space. Furthermore, a video generated by the information processing apparatus is displayed by a display device connected to the information processing apparatus.

### BRIEF DESCRIPTION OF DRAWINGS

Fig. 1 is a block diagram illustrating a configuration example of an information processing apparatus according to an embodiment of the present technology.
Fig. 2 is a diagram illustrating an example of a display unit.
Fig. 3 is a diagram illustrating a first example of a 3D object and a GUI viewed from a viewpoint of a user.
Fig. 4 is a diagram for describing a method of cutting out a 3D object using a three-sided corner cube.
Fig. 5 is another diagram for describing the method of cutting out the 3D object using the three-sided corner cube.
Fig. 6 is a diagram illustrating an example of a cross-sectional portion of a 3D object in a case where highlight display is turned off.
Fig. 7 is a diagram for describing a method of operating a three-sided corner cube.
Fig. 8 is another diagram for describing the method of operating the three-sided corner cube.
Fig. 9 is a diagram illustrating a display example of the three-sided corner cube.
Fig. 10 is a diagram illustrating an example of a UI plane.
Fig. 11 is a diagram illustrating an arrangement example of a cursor.
Fig. 12 is a diagram illustrating a second example of a 3D object and a GUI viewed from a viewpoint of a user.
Fig. 13 is a diagram for describing a method of cutting out a 3D object using a cube.
Fig. 14 is a diagram for describing a method of operating a cube.
Fig. 15 is a flowchart describing a process performed by the information processing apparatus.
Fig. 16 is a block diagram illustrating a configuration example of hardware of a computer.

### MODE FOR CARRYING OUT THE INVENTION

Hereinafter, modes for carrying out the present technology will be described. The description is given in the following order.
1. Configuration of information processing apparatus
2. Details of method of displaying 3D object and GUI
3. Operation of information processing apparatus

### <1. Overview of information processing apparatus>

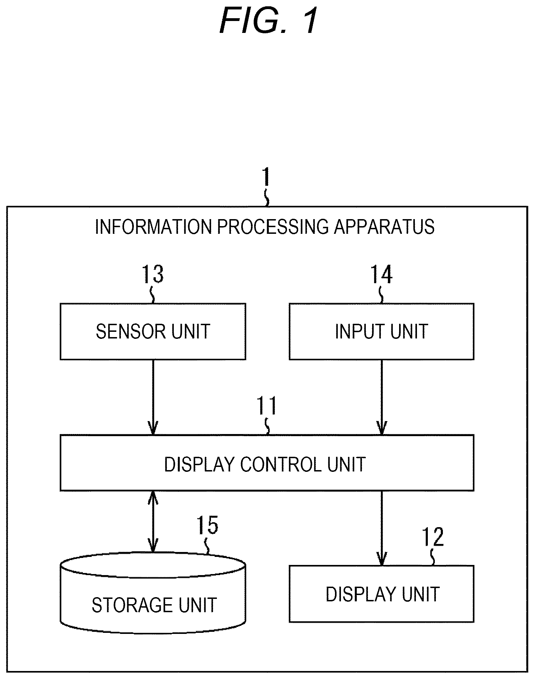

Fig. 1 is a block diagram illustrating a configuration example of an information processing apparatus 1 according to one embodiment of the present technology.

As illustrated in Fig. 1, the information processing apparatus 1 includes a display control unit 11, a display unit 12, a sensor unit 13, an input unit 14, and a storage unit 15.

The display control unit 11 controls display of the display unit 12. The display control unit 11 also functions as a video generation unit that generates a video including a 3D object and a GUI for controlling the 3D object arranged in a virtual space. The display control unit 11 generates a video on the basis of tracking of the viewpoint position of the user. The display control unit 11 controls the display unit 12 to display the generated video. The data of the 3D object and the GUI is acquired from, for example, the storage unit 15.

The display unit 12 displays a video under the control of the display control unit 11. The display unit 12 is configured by, for example, a space reproduction display capable of performing stereoscopic display by binocular parallax by presenting different videos to the left eye and the right eye of the user. The display unit 12 may include a lenticular lens array or a parallax barrier for presenting different videos to the left eye and the right eye of the user, or may support stereoscopic display using a liquid crystal shutter or an active retarder type glasses.

The sensor unit 13 acquires (senses) various types of information regarding the user or the surrounding environment. The sensor unit 13 includes at least a sensor for detecting the viewpoint position of the user. In the sensor unit 13, the sensor unit 13 itself may detect the viewpoint position of the user and supply information indicating the viewpoint position of the user to the display control unit 11, or may supply information for detecting the viewpoint position of the user to the display control unit 11.

For example, in a case where the information processing apparatus 1 is installed in a real space, the sensor for detecting the viewpoint position of the user may be a camera that images the user. In a case where the information processing apparatus 1 is an apparatus that moves by being worn by the user, the sensor for detecting the viewpoint position of the user may be any one of an acceleration sensor, a gyro sensor, an azimuth sensor, and a camera, or a combination of the above. Furthermore, the sensor unit 13 may include a camera arranged to image a region corresponding to the user's field of view in the real space.

The input unit 14 accepts an input of an operation by the user and supplies information indicating the content of the operation by the user to the display control unit 11. The input unit 14 is configured by, for example, a mouse or a trackball capable of inputting an operation in a two-dimensional direction. Furthermore, the input unit 14 may be configured by a touch panel that accepts a touch operation by the user, and in this case, the display unit 12 may have the function of the input unit 14.

The storage unit 15 stores programs and parameters for the display control unit 11 to execute functions. Furthermore, the storage unit 15 may store data of a 3D object or GUI displayed by the display control unit 11.

Note that the configuration illustrated in Fig. 1 is an example, and the present technology is not limited to such an example. For example, the display control unit 11 may control display of a display unit provided outside the information processing apparatus 1. Furthermore, the display control unit 11 may acquire the data of the 3D object from another device via a communication unit (not illustrated). The information processing apparatus 1 may not include the sensor unit, and the above-described information may be transmitted from a sensor installed outside the information processing apparatus 1 to the information processing apparatus 1. Furthermore, for example, the information processing apparatus 1 may have a configuration of a system in which each of a PC monitor (display unit 12), a camera (sensor unit 13), and a mouse (input unit 14) is connected to a personal computer having the display control unit 11 and the storage unit 15.

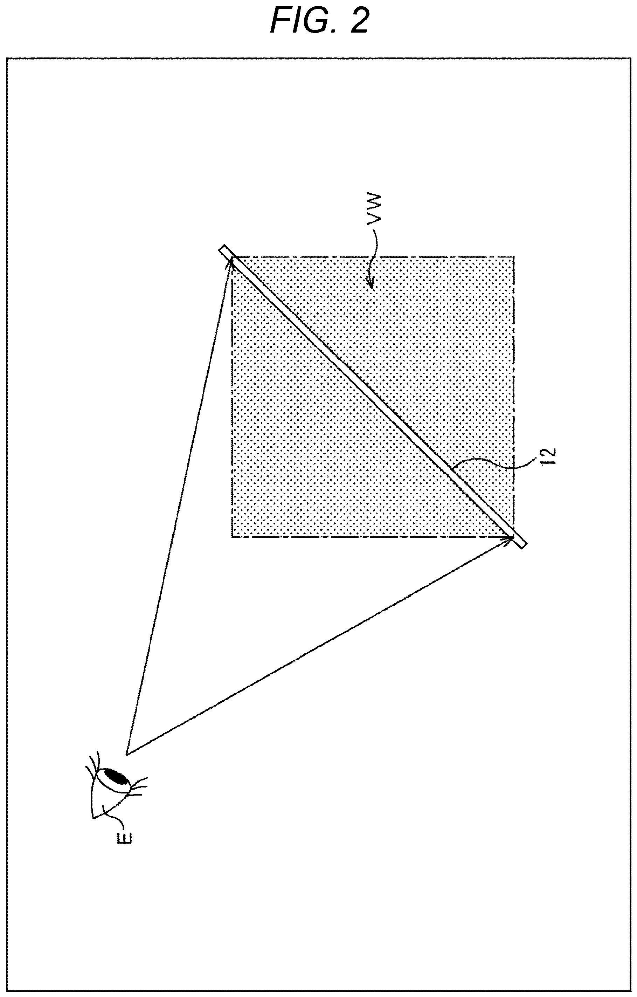

Fig. 2 is a diagram illustrating an example of the display unit 12.

As illustrated in Fig. 2, for example, the display unit 12 is arranged such that the display surface faces obliquely upward with respect to the horizontal plane in the real space. In this case, for example, the display control unit 11 arranges a virtual space VW so as to intersect with the display surface of the display unit 12, in other words, so as to have regions on both the near side and the far side of the display unit 12 when viewed from the viewpoint E of the user, and causes the display unit 12 to display the virtual space VW.

The 3D object arranged in the virtual space VW is displayed such that, for example, one part looks as if popping out from the display unit 12. For example, the display unit 12 can express a virtual depth by displaying a stereoscopic video in which different videos are presented to the left eye and the right eye of the user, and give the user a feeling as if the 3D object exists in the real space.

Note that the present technology can be applied not only to a device that displays a stereoscopic video but also to a device that displays a video in which the same video is presented to the left eye and the right eye. For example, a 3D object or a GUI may be arranged in a virtual space VW displayed on a general PC monitor that does not support stereoscopic display.

### <2. Details of method for displaying 3D object and GUI >

### •First display method

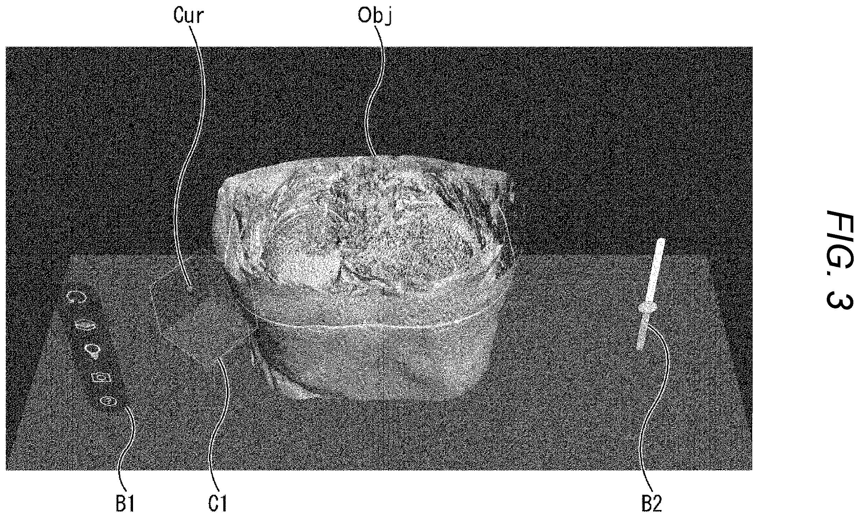

Fig. 3 is a diagram illustrating a first example of a 3D object and a GUI viewed from a viewpoint of the user.

In the first display method illustrated in Fig. 3, a 3D object Obj, a three-sided corner cube C1, a cursor Cur, a menu bar B1, and a slide bar B2 are arranged in the virtual space displayed on the display unit 12.

The 3D object Obj is, for example, a 3D model of an object having a three-dimensional shape, and has not only a surface shape but also an internal shape. The 3D object Obj is, for example, a 3D model indicating a structure of a human body acquired by scanning the human body. The three-sided corner cube C1 is a GUI for setting a cutout position of a portion of the 3D object Obj, and is configured by three planes in which two sides are shared with other planes.

The cursor Cur is a cursor that moves according to the user operating the input unit 14. Icons indicating various functions related to the display of the 3D object are displayed on the menu bar B1. For example, the user can cause the information processing apparatus 1 to execute various functions by moving the cursor Cur onto the icon on the menu bar B1 and selecting the same.

The slide bar B2 is used, for example, to set the size of the 3D object Obj, and the user can set the 3D object Obj to a desired size by determining the position of the operator movable along the slide bar B2.

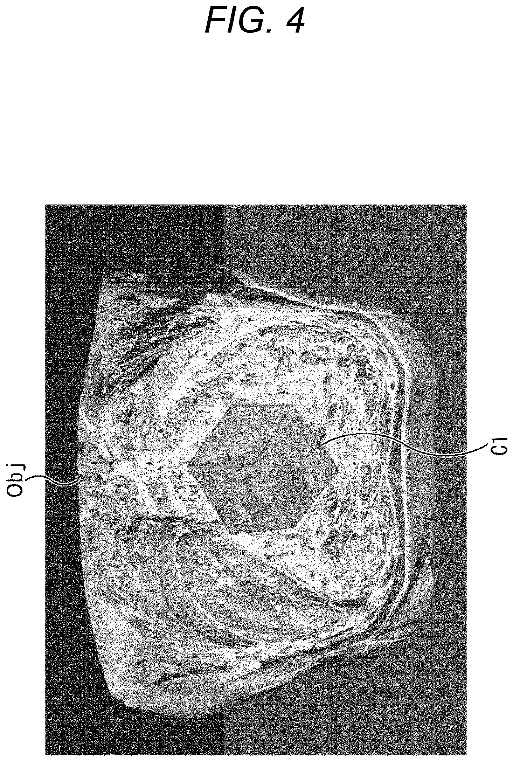

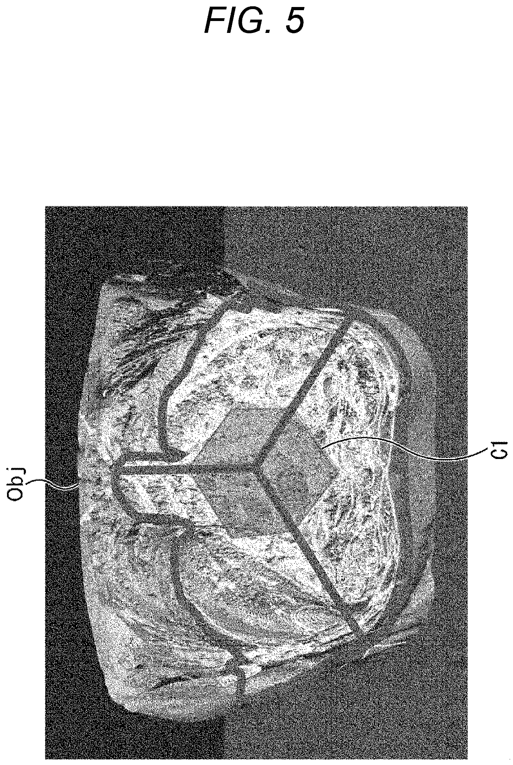

Figs. 4 and 5 are diagrams describing a method of cutting out the 3D object Obj using the three-sided corner cube C1.

As illustrated in Fig. 4, in a case where the 3D object Obj and the three-sided corner cube C1 overlap, the portion of the 3D object Obj included in the region on the inner side (concave side) of the three-sided corner cube C1 is cut out. In this case, the portion of the 3D object Obj included in the region on the outer side (convex side) of the three-sided corner cube C1 is displayed.

Specifically, as indicated by a gray thick line in Fig. 5, a portion of the 3D object Obj is cut out along each of the three planes of the three-sided corner cube C1. By determining the position of the three-sided corner cube C1, the user can set the cutout position of the 3D object Obj and observe the internal shape of the 3D object Obj. In the information processing apparatus 1, since the stereoscopic video is displayed so as to reproduce the binocular parallax, the user can easily grasp the shape of the back of the cross-sectional portion. The recognition accuracy of the user is enhanced by cutting out the unnecessary portion. Hereinafter, a technology of displaying a portion of the 3D object Obj in a cutout state using the three-sided corner cube C1 is referred to as a three-sided clip.

For example, when the shape of the back of the cross-sectional portion is transparently displayed in the 3D object Obj, the cross-sectional portion and the other shapes are assimilated, and it may be difficult for the user to distinguish the cross-sectional portion and the other shapes. In this case, in order to clarify the cross-sectional portion, as illustrated in Figs. 4 and 5, for example, the cross-sectional portion along the plane of the three-sided corner cube C1 is displayed in a highlighted manner, such as displaying only the cross-sectional portion by light emission or coloring.

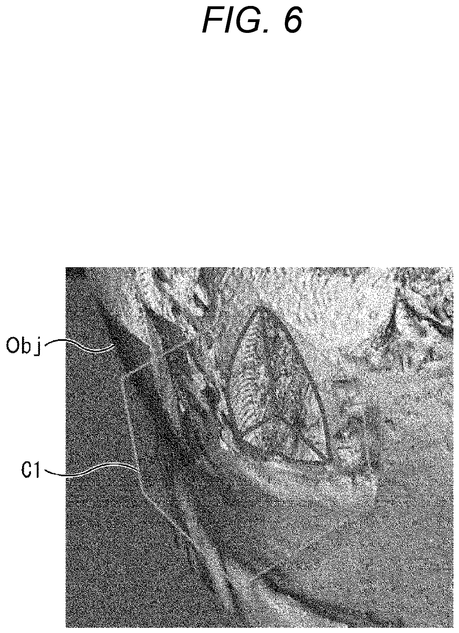

Note that, in a case where the user wants to view the internal shape of the 3D object Obj in detail, it is also possible to turn off the highlight display of the cross-sectional portion of the 3D object Obj as illustrated in Fig. 6. As described above, the information processing apparatus 1 may have a function of switching on/off the highlight display of the cross-sectional portion of the 3D object Obj.

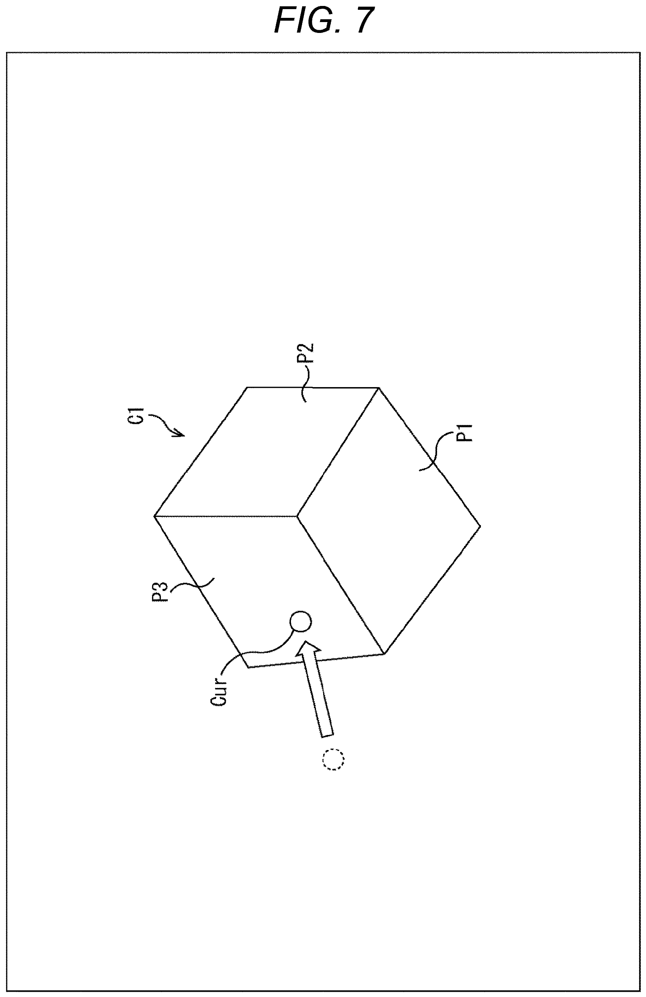

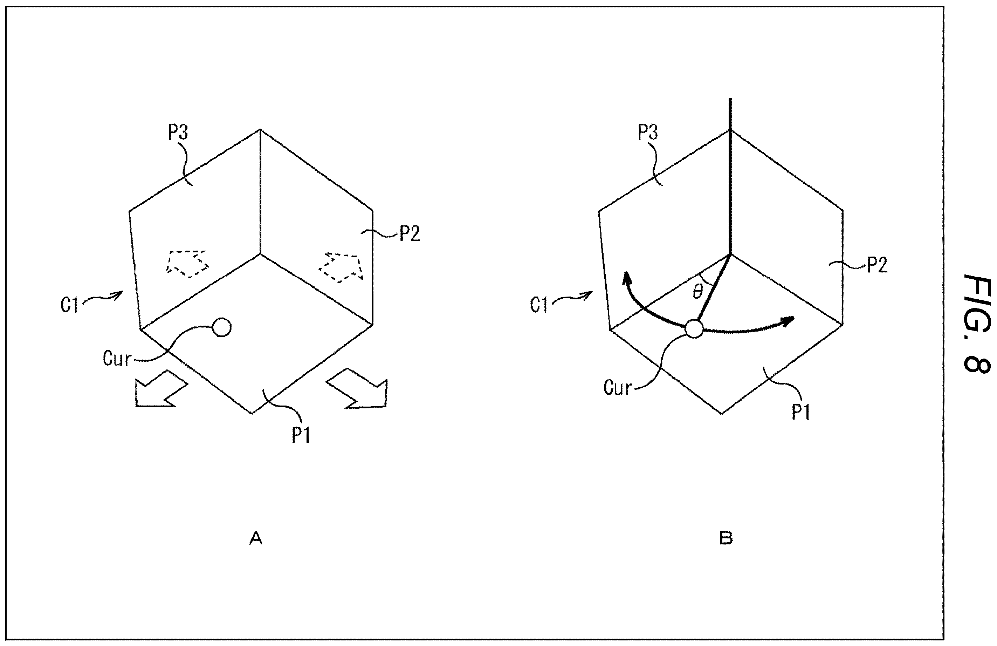

Figs. 7 and 8 are diagrams for describing a method for operating the three-sided corner cube C1.

Hereinafter, description will be made assuming that the three-sided corner cube C1 is configured by planes P1 to P3 in a space expressed by three axes of XYZ. Note that the plane P1 indicates a plane (on the XY plane) corresponding to the XY plane parallel to the floor surface on which the display unit 12 is installed, and the plane P2 indicates a plane (on the XZ plane) corresponding to the XZ plane orthogonal to the XY plane. The plane P3 indicates a plane (on the YZ plane) corresponding to the YZ plane orthogonal to the XY plane and the XZ plane. In the three-sided corner cube C1, a state sufficiently small with respect to the 3D object Obj is set as an initial state.

As indicated by an outlined arrow in Fig. 7, in a case where the cursor Cur is moved onto a plane from a position other than the plane of the three-sided corner cube C1, the information processing apparatus 1 enters the three-sided clip operation mode. In the three-sided clip operation mode, the cursor Cur moves on a plane (any of XY plane, XZ plane, and YZ plane) below the cursor Cur.

During the three-sided clip operation mode, the user can move the three-sided corner cube C1 and change the cutout position of the 3D object Obj by moving the mouse (cursor Cur) while performing the first operation (for example, pressing the left button of the mouse) serving as the input unit 14. The first operation is, for example, a selecting operation of selecting one of the planes configuring the three-sided corner cube C1.

As illustrated in A of Fig. 8, in a case where the cursor Cur is on the plane P1, the Z value of the three-sided corner cube C1 is fixed, and the three-sided corner cube C1 moves so as to slide on the XY plane as indicated by the outlined arrow. Similarly, in a case where the cursor Cur is on the plane P2, the Y value of the three-sided corner cube C1 is fixed, and the three-sided corner cube C1 moves so as to slide on the XZ plane. In addition, in a case where the cursor Cur is on the plane P3, the X value of the three-sided corner cube C1 is fixed, and the three-sided corner cube C1 moves so as to slide on the YZ plane.

During the three-sided clip operation mode, the user can rotate the three-sided corner cube C1 and change the cutout direction of the 3D object Obj by moving the mouse (cursor Cur) while performing the second operation (for example, pressing the right button of the mouse). The second operation is, for example, a selecting operation of selecting one of the planes configuring the three-sided corner cube C1.

As illustrated in B of Fig. 8, in a case where the cursor Cur is on the plane P1, the three-sided corner cube C1 rotates on the XY plane about the Z axis of the three-sided corner cube C1 (for example, the side shared by the plane P2 and the plane P3). In a case where the right button of the mouse is pressed, the cursor Cur moves on a plane (XY plane) perpendicular to the rotation axis so as to rotate about the rotation axis (Z axis) as indicated by an arrow in B of Fig. 8. When the cursor rotates about the rotation axis in a state where an angle θ formed by the straight line connecting the rotation axis and the cursor Cur and the plane P3 is fixed, the three-sided corner cube C1 rotates similarly to the cursor Cur.

Similarly, in a case where the cursor Cur is on the plane P2, the three-sided corner cube C1 rotates on the XZ plane about the Y axis of the three-sided corner cube C1 (for example, the side shared by the plane P1 and the plane P3). Furthermore, in a case where the cursor Cur is on the plane P3, the three-sided corner cube C1 rotates on the YZ plane about the X axis of the three-sided corner cube C1 (for example, the side shared by the plane P1 and the plane P2).

When the horizontal movement amount of the mouse is converted into the rotation angle of the three-sided corner cube C1, it is assumed that the cursor deviates from the plane of the three-sided corner cube C1 and the operation feeling deteriorates. For example, in a case where the cursor is on the plane P1, while the right button of the mouse is being pressed, the arc-shaped movement amount of the mouse is made to correspond to the rotation amount of the three-sided corner cube C1 on the XY plane, whereby an intuitive rotation operation can be performed. In addition, while the right button of the mouse is being pressed, the cursor Cur can be prevented from deviating from the plane of the three-sided corner cube C1.

As described above, the GUI such as the three-sided corner cube C1 can change at least one of the position or the direction by the operation in the two-dimensional direction by the user. Note that, for example, in a case where the cursor Cur is on the plane P1, the shape of the three-sided corner cube C1 may be changeable by an operation in the two-dimensional direction such that at least one of the plane P2 or the plane P3 is deformed when a predetermined operation (pressing of both left and right buttons of the mouse, operation of the mouse wheel, etc.) is performed.

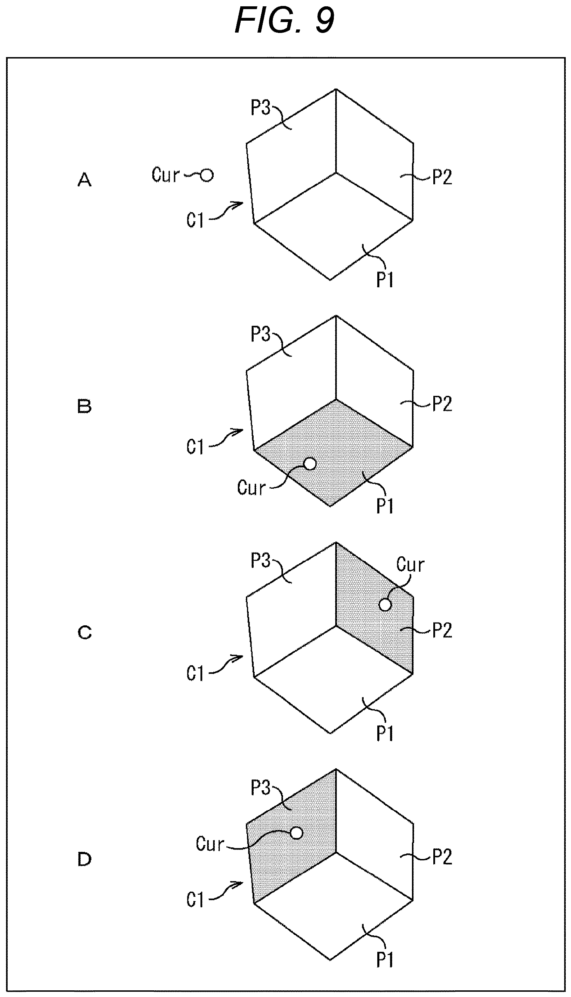

Fig. 9 is a diagram illustrating a display example of the three-sided corner cube C1.

As illustrated in A of Fig. 9, in a case where the cursor Cur is not on any of the planes P1 to P3, the planes P1 to P3 are displayed in, for example, a transparent state. As illustrated in B of Fig. 9, in a case where the cursor Cur is on the plane P1, the plane P1 below the cursor Cur is displayed, for example, in a colored state, and the planes P2 and P3 are displayed, for example, in a transparent state.

As illustrated in C of Fig. 9, in a case where the cursor Cur is on the plane P2, the plane P2 below the cursor Cur is displayed, for example, in a colored state, and the planes P1 and P3 are displayed, for example, in a transparent state. As illustrated in D of Fig. 9, in a case where the cursor Cur is on the plane P3, the plane P3 below the cursor Cur is displayed, for example, in a colored state, and the planes P1 and P2 are displayed, for example, in a transparent state.

As described above, which plane of the three-sided corner cube C1 the cursor Cur is on is clearly indicated by color. Note that which plane of the three-sided corner cube C1 the cursor Cur is on may be clearly indicated not only by color, and also by changing luminance (brightness) or a pattern (pattern).

Note that the cursor Cur can freely move in the virtual space displayed on the display unit 12. Generally, a cursor is drawn so as to move on a display surface of a display device. In the present technology, the cursor Cur is drawn so as to basically move on a two-dimensional UI plane arranged in the virtual space. In the present technology, for example, the cursor Cur is virtually arranged at a position where a straight line connecting the viewpoint position of the user and the cursor position generally displayed on the display device and the UI plane arranged in the virtual space intersect.

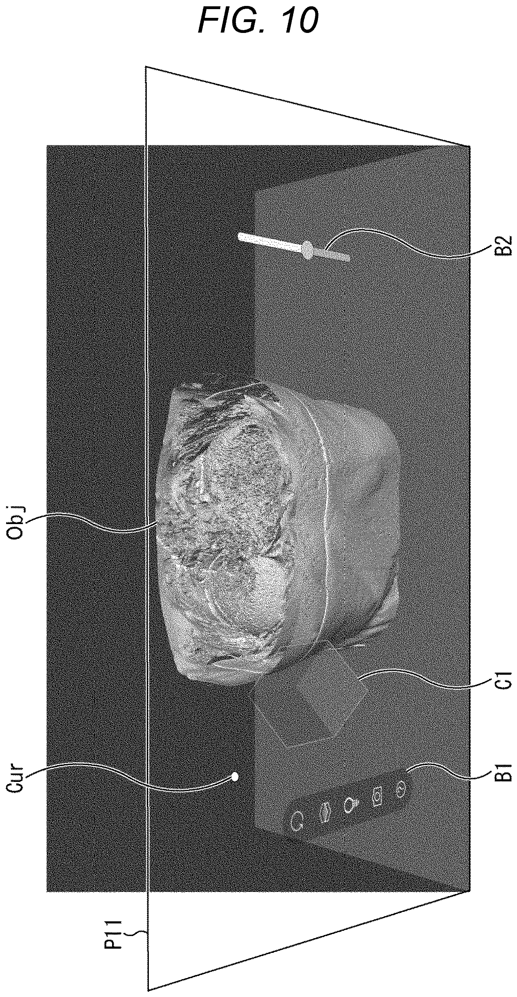

Fig. 10 is a diagram illustrating an example of a UI plane.

In the example of Fig. 10, the UI plane P11 on which the cursor Cur is arranged is the foremost plane of the virtual space and is arranged as a plane perpendicular to the XY plane. For example, other GUIs such as the menu bar B1 and the slide bar B2 are also drawn on the UI plane P11 together with the cursor Cur.

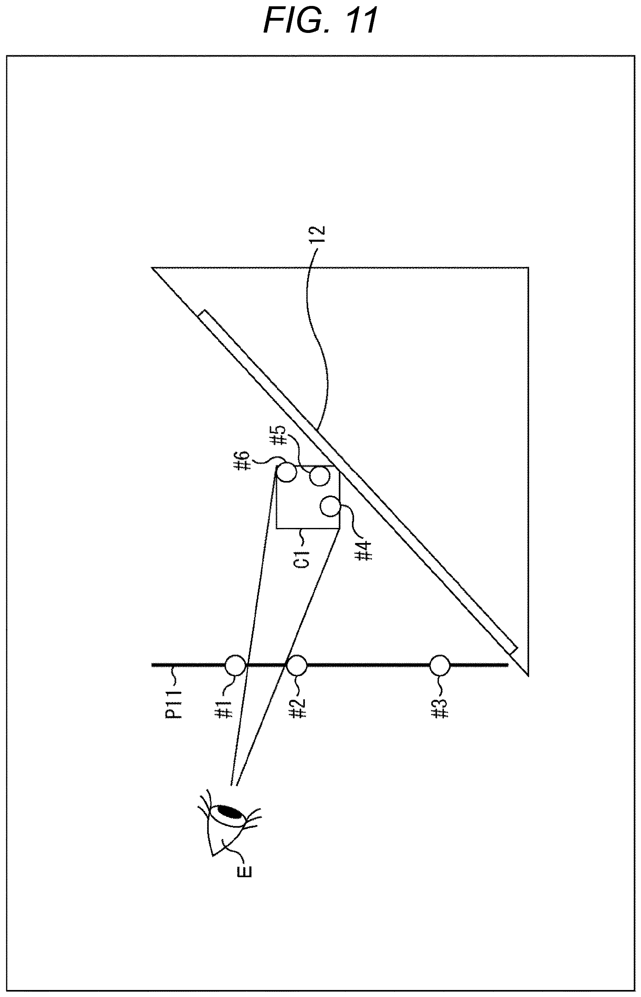

Fig. 11 is a diagram illustrating an arrangement example of the cursor Cur.

At the normal time (in a case where the cursor Cur is not on the plane of the three-sided corner cube), the cursor Cur is arranged on the UI plane P11 as indicated by #1 to #3 in Fig. 11. The cursor Cur for the right eye is drawn on a straight line connecting the position of the right eye of the user and the cursor position generally displayed on the display device, and the cursor Cur for the left eye is drawn on a straight line connecting the position of the left eye of the user and the cursor position generally displayed on the display device, so that the user feels that the cursor Cur is disposed on the UI plane P11 in the air.

In a case where the cursor Cur enters the region connecting the position of the viewpoint E of the user and the three-sided corner cube C1, the cursor Cur is arranged on the plane of the three-sided corner cube C1 as indicated by #4 to #6 in Fig. 11.

As described above, in a case where the cursor Cur is not in the region connecting the position of the viewpoint E of the user and the object (for example, a 3D object or a GUI) arranged in the virtual space, the display control unit 11 controls the cursor Cur to move along a predetermined plane arranged in the virtual space. In addition, in a case where the cursor Cur enters a region connecting the position of the viewpoint E of the user and the object arranged in the virtual space, the display control unit 11 moves the cursor Cur from a predetermined plane onto the surface of the object and controls the cursor Cur to move along the surface of the object.

### •Second display method

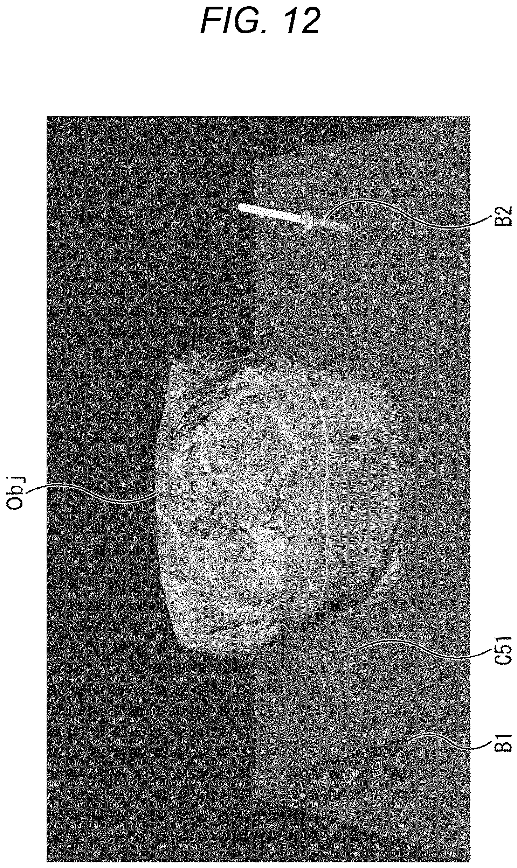

Fig. 12 is a diagram illustrating a second example of a 3D object and a GUI viewed from a viewpoint of the user.

In the first display method (Fig. 3), the 3D object Obj, the three-sided corner cube C1, the cursor Cur, the menu bar B1, and the slide bar B2 are arranged in the virtual space displayed by the display unit 12. In the second display method illustrated in Fig. 12, the cube C51 is arranged in the virtual space instead of the three-sided corner cube C1.

The cube C51 is a GUI for setting a cutout position of a portion of the 3D object Obj, and is a GUI having a substantially box-like shape configured by six planes.

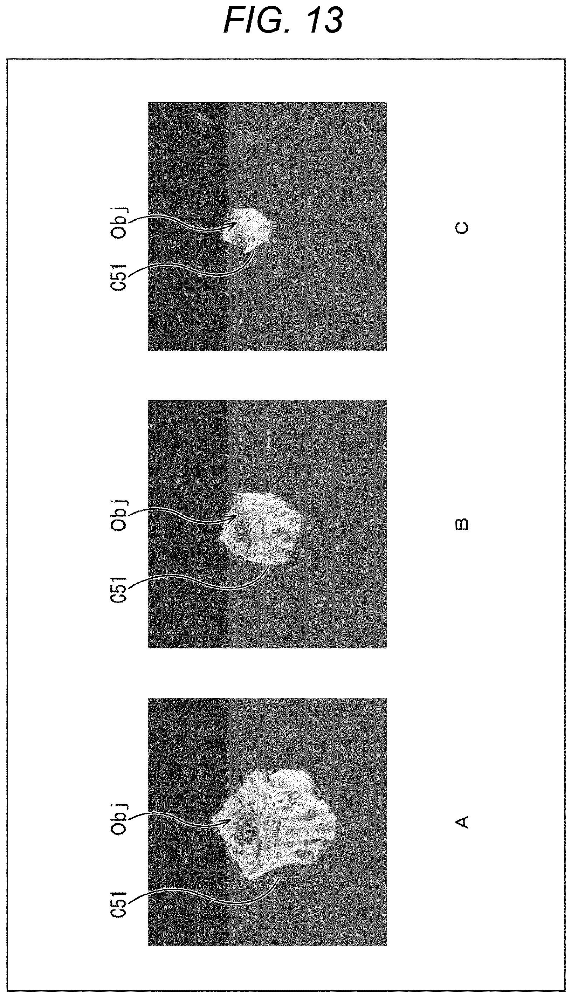

Fig. 13 is a diagram describing a method of cutting out the 3D object Obj using the cube C51.

In a case where the 3D object Obj and the cube C51 overlap, as illustrated in A of Fig. 13, a portion of the 3D object Obj included in a region on the outer side of the cube C51 is cut out. In this case, the portion of the 3D object Obj included in the region on the inner side of the three-sided corner cube C1 is displayed.

By determining the position of the cube C51, the user can set the cutout position of the 3D object Obj and observe the internal shape of the 3D object Obj. Hereinafter, a technology of displaying a portion of the 3D object Obj in a cutout state using the cube C51 is referred to as a six-sided clip. In a case where the 3D object Obj is, for example, a 3D model indicating a structure of a human body, since a portion of the outer side of the cube C51 is cut out in the 6-face clip, it is possible to observe the 3D model of a small tissue on the inner side of the cube C51 in a greatly enlarged manner at a pinpoint.

Note that, similarly to the three-sided clip, also in the six-sided clip as well, the cross-sectional portion is displayed in a highlighted manner, such as for example, only the cross-sectional portion is displayed by light emission or coloring in order to clarify the cross-sectional portion of the 3D object Obj.

Hereinafter, description will be made assuming that the cube C51 is a rectangular parallelepiped surrounded by an upper surface, a lower surface, and four side surfaces. Note that the upper surface and the lower surface of the cube C51 indicate planes (on the XY plane) corresponding to the XY plane parallel to the floor surface on which the display unit 12 is installed, and two opposing side surfaces indicate planes (on the XZ plane) corresponding to the XZ plane orthogonal to the XY plane. The other two side surfaces indicate planes (on the YZ plane) corresponding to the YZ plane orthogonal to the XY plane and the XZ plane.

In a case where the cursor Cur is moved from a position other than the position on the plane of the cube C51 onto the plane, the information processing apparatus 1 enters the six-sided clip operation mode. During the six-sided clip operation mode, the cursor Cur moves on a plane (upper surface, lower surface, or side surfaces of the cube C51) below the cursor Cur.

During the six-sided clip operation mode, the user can change the size of the cube C51 by performing the third operation (for example, operation of a wheel of a mouse). By operating the wheel of the mouse, for example, as illustrated in B of Fig. 13, the cube C51 becomes smaller, and the user can further observe the inside of the 3D object Obj. Furthermore, by further operating the wheel of the mouse, for example, as illustrated in C of Fig. 13, the cube C51 becomes smaller, and the user can further observe the inside of the 3D object Obj.

Note that the user can also enlarge the cube C51 by operating the wheel of the mouse during the six-sided clip operation mode.

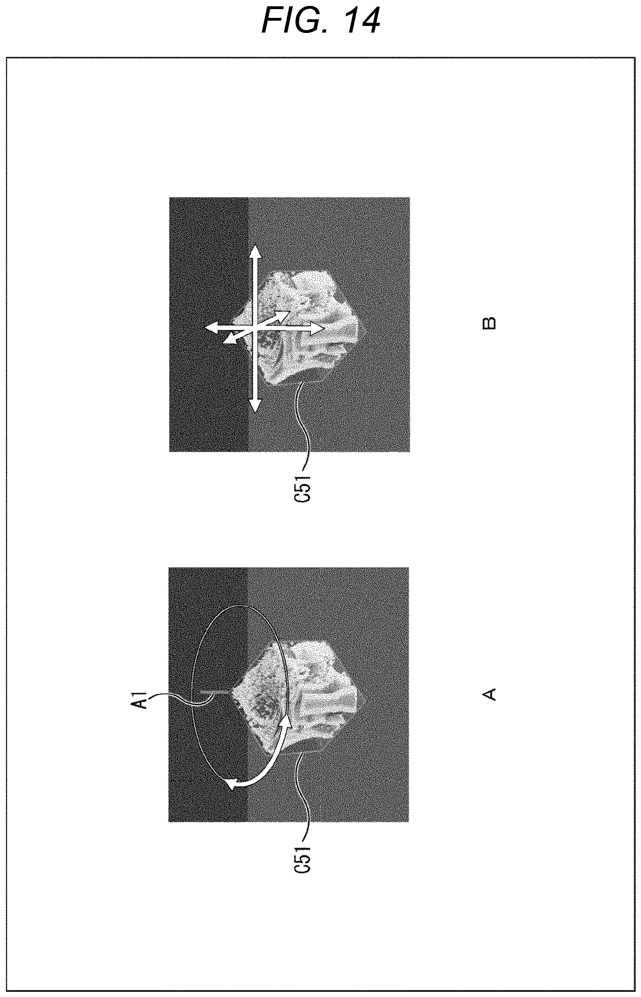

Fig. 14 is a diagram for describing an operation method of the cube C51.

During the six-sided clip operation mode, the user can rotate the cube C51 and change the cutout direction of the 3D object Obj by moving the mouse (cursor) while performing the second operation (for example, pressing the right button of the mouse).

In a case where the cursor is on an upper surface of the cube C51, the cube C51 rotates on the XY plane about an axis A1 perpendicular to the upper surface as indicated by an arrow A in Fig. 14. Similarly, in a case where the cursor is on a side surface of the cube C51, the cube C51 rotates on the XZ plane or the YZ plane about an axis perpendicular to the side surface.

When the horizontal movement amount of the mouse is converted into the rotation angle of the cube C51, it is assumed that the cursor will deviate from the plane of the cube C51 and the operation feeling will deteriorate. For example, in a case where the cursor is on the upper surface of the cube C51, while the right button of the mouse is pressed, the arc-shaped movement amount of the mouse is made to correspond to the amount of rotation of the cube C51 on the XY plane, whereby an intuitive rotation operation can be performed. Furthermore, while the right button of the mouse is pressed, the cursor can be prevented from deviating from the plane of the cube C51.

During the six-sided clip operation mode, the user can move the cube C51 and change the cutout position of the 3D object Obj as indicated by the outlined arrow B in Fig. 14 by moving the mouse (cursor) while performing the first operation (for example, pressing the left button of the mouse).

In a case where the cursor is on the upper surface of the cube C51, the Z value of the cube C51 is fixed, and the cube C51 is moved to slide on the XY plane. Similarly, in a case where the cursor is on the side surface, the Y value or Z value of the cube C51 is fixed, and the cube C51 is moved to slide on the XZ plane or the YZ plane.

Similarly to the three-sided corner cube C1, in the cube C51 as well, the plane under the cursor is displayed in, for example, a colored manner. Furthermore, in the six-sided clip, the cursor is drawn so as to basically move on the UI plane arranged in the virtual space, and in a case where the cursor enters the region connecting the viewpoint position of the user and the cube C51, the cursor is drawn so as to move on the plane of the cube C51.

Note that, in a case where the cursor is not on the three-sided corner cube C1 or the cube C51 in the three-sided clip or the six-sided clip, the information processing apparatus 1 enters the 3D object operation mode.

During the 3D object operation mode, the user can move the 3D object by moving the mouse while pressing the left button of the mouse. Furthermore, during the 3D object operation mode, the user can rotate the 3D object by moving the mouse while pressing the right button of the mouse. Moreover, during the 3D object operation mode, the user can change the size of the 3D object by operating the wheel of the mouse.

As described above, in the information processing apparatus 1 of the present technology, parts (planes) configuring the GUI such as the three-sided corner cube C1 and the cube C51 are used as marks for switching the plane (control plane) on which the GUI slides and the rotation axis of the GUI. The user can intuitively perform the six-axis operation on the GUI by designating the planes configuring the GUI using the input device (input unit 14) operable in the two-dimensional direction and switching the control plane and the rotation axis.

In general, in a case where a 3D object itself, a GUI for controlling display of the 3D object, or the like is operated, it is effective to use an input device that can be moved in a three-dimensional direction in a real space. However, the user needs to keep gripping the input device in midair, which increases fatigue.

In the information processing apparatus 1 of the present technology, the GUI can be spatially operated using a mouse or the like generally used on a desk. The user can operate the GUI by moving a familiar mouse or the like on a desk, which is less tiring. Therefore, the user can suitably operate the GUI for controlling the display of the 3D object.

Furthermore, in a case where a 3D model of an object having an internal shape is stereoscopically displayed and the user wants to see the internal shape of the object, generally, a process of making a portion of the 3D model translucent or cutting out at a predetermined plane to display a cross section is performed. In this case, it takes time and effort to specify the portion to be made translucent, or the range that can be confirmed is limited to the cross-sectional portion.

In the information processing apparatus 1 of the present technology, since the 3D object is cut out at at least three planes, it is relatively easy to specify a region to be cut out, and it is possible to limit a portion to be viewed more precisely.

In the information processing apparatus 1 of the present technology, stereoscopic vision that enables motion parallax representation is realized on the basis of tracking of the viewpoint position of the user. The cross-sectional portion of the 3D object and the structure in the vicinity of the cross-sectional portion are separated and recognized in the brain of the user by feedback such as a position change due to movement, shaking, vibration, or the like of the head and a video change with respect to the position change. Although the region (depth) that is easily separated is narrow, in the present technology, the portion of the 3D object included in the region up to the front of the gaze region is cut out, and thus the spatial structure can be easily grasped. By displaying the cross-sectional portion in a highlighted manner, there is also an effect of recognizing the cross-sectional portion and making the structure at the back of the cross-sectional portion easy to understand.

The user can understand the structure of the 3D object in more detail by moving the GUI using a mouse or the like to dynamically change the cross-section of the 3D object. In other words, the information processing apparatus 1 according to the present technology can realize real-time feedback that presents a video corresponding to an operation (involvement) of the user.

### <3. Operation of information processing apparatus>

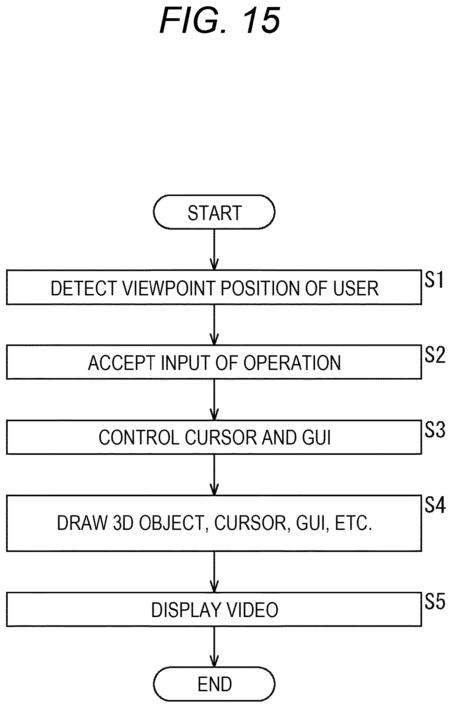

Next, the process performed by the information processing apparatus 1 having the forgoing configuration will be described with reference to a flowchart of Fig. 15.

In step S1, the sensor unit 13 detects the viewpoint position of the user.

In step S2, the input unit 14 accepts an input of an operation by the user.

In step S3, the display control unit 11 controls the position of the cursor and the position and direction of the GUI according to the operation by the user.

In step S4, the display control unit 11 draws a 3D object, a cursor, a GUI, and the like, and generates a video. Specifically, the display control unit 11 specifies the cutout position and the cutout direction of the 3D object on the basis of the position and the direction of the GUI, and hides or deletes the polygon, the point group data, the texture, and the like of the 3D object along the plane of the GUI. The display control unit 11 transmits the cutout portion and draws the inside of the 3D object.

By hiding or deleting a portion of the 3D object, it is possible to lower the required performance of the information processing apparatus 1 that performs rendering than when making the relevant portion translucent. In particular, in the six-sided clip, it is possible to express the 3D object more precisely by intensively rendering a small region.

The video generated by the display control unit 11 is an image in which an object such as a 3D object or a GUI arranged in the virtual space is perspective projected on the display surface of the display unit 12 on the basis of the viewpoint position of the user. In a case where the video is a stereoscopic video, the same object appears in different positions and shapes when viewed from the right and left viewpoint positions. Therefore, when the videos visually recognized by the left eye and the right eye are synthesized in the brain, the display control unit 11 performs arrangement process and deformation process of the objects in the video so that the same object is recognized as the same position, the same shape, and the same size.

In step S5, the display unit 12 displays the video generated by the display control unit 11.

As described above, in the information processing apparatus 1, a video including a 3D object and a GUI having at least three planes arranged in a virtual space, the video including a 3D object in which one portion is cut out along the plane of the GUI is generated and displayed in a case where the 3D object and the GUI overlap in the virtual space.

The user can suitably operate the GUI for specifying the cutout position of the 3D object and observe the internal shape of the 3D object.

Note that the method of expressing a 3D object or a GUI in the present technology is realized by, for example, a software application, a plug-in tool, a library, or the like executed in an information processing apparatus that controls display of a viewpoint-following type spatial reproduction display.

### <Regarding computer>

The above-described series of processing can be performed by hardware or can be performed by software. In a case where the series of processing steps is executed by software, a program included in the software is installed from a program recording medium on a computer incorporated in dedicated hardware, a general-purpose personal computer, or the like.

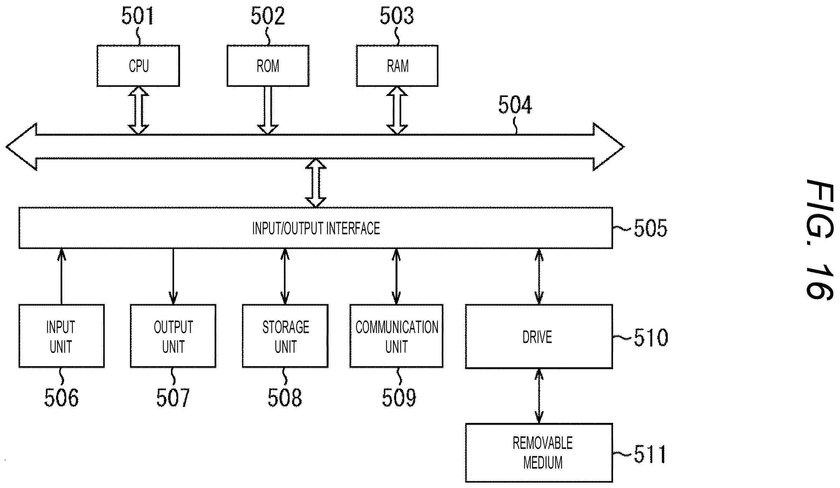

Fig. 16 is a block diagram illustrating a configuration example of hardware of a computer that executes the above-described series of processing by a program.

A central processing unit (CPU) 501, a read only memory (ROM) 502, and a random access memory (RAM) 503 are connected to each other by a bus 504.

An input/output interface 505 is further connected to the bus 504. An input unit 506 including a keyboard, a mouse, and the like, and an output unit 507 including a display, a speaker, and the like are connected to the input/output interface 505. Furthermore, a storage unit 508 including a hard disk, a nonvolatile memory, or the like, a communication unit 509 including a network interface or the like, and a drive 510 that drives a removable medium 511 are connected to the input/output interface 505.

In the computer configured as described above, for example, the CPU 501 loads a program stored in the storage unit 508 into the RAM 503 via the input/output interface 505 and the bus 504 and executes the program to execute the above-described series of processing.

For example, the program executed by the CPU 501 is recorded in the removable medium 511, or provided via a wired or wireless transmission medium such as a local area network, the Internet, or digital broadcasting, and then installed in the storage unit 508.

The program executed by the computer may be a program in which the processing is performed in time series in the order described in the present description, or may be a program in which the processing is performed in parallel or at a necessary timing such as when a call is made and the like.

Note that, in the present specification, a system means an assembly of a plurality of components (devices, modules (parts), and the like), and it does not matter whether or not all the components are located in the same housing. Therefore, a plurality of devices housed in separate housings and connected to each other via a network and one device in which a plurality of modules is housed in one housing are both systems.

The effects described in the specification are merely examples and are not limited, and other effects may be provided.

An embodiment of the present technology is not limited to the above-described embodiment, and various modifications can be made without departing from the scope of the present technology.

For example, the present technology can be configured as cloud computing in which one function is shared and jointly processed by a plurality of devices via a network.

Furthermore, each step described in the above-described flowcharts can be executed by one device or shared and executed by a plurality of devices.

Moreover, in a case where one step includes a plurality of processing, the plurality of processing included in the one step can be executed by one device or shared and executed by a plurality of devices.

### <Combination examples of configurations>

The present technology can also be configured as follows.

(1) An information processing apparatus including a video generation unit configured to generate a video including a 3D object and a GUI having at least three planes arranged in a virtual space, the video including the 3D object in which one portion is cut out along a plane of the GUI in a case where the 3D object and the GUI overlap in the virtual space.
(2) The information processing apparatus according to (1), in which the video generation unit changes at least one of a position, a direction, or a shape of the GUI on the basis of an input operation in a two-dimensional direction.
(3) The information processing apparatus according to (1) or (2), in which in a case where a cursor is on a plane of the GUI, the video generation unit moves the cursor on the plane of the GUI.
(4) The information processing apparatus according to (3), in which the video generation unit moves the GUI on a plane corresponding to one plane of the GUI in response to an operation of moving the cursor in a state where the one plane of the GUI is selected.
(5) The information processing apparatus according to (3) or (4), in which the video generation unit rotates the GUI on a plane corresponding to one plane of the GUI in response to an operation of moving the cursor in a state where the one plane of the GUI is selected.
(6) The information processing apparatus according to any one of (3) to (5), in which the video generation unit changes the size of the GUI according to a predetermined operation in a state where the cursor is on a plane of the GUI.
(7) The information processing apparatus according to any one of (3) to (6), in which the video generation unit deforms the GUI according to a predetermined operation in a state where the cursor is on a plane of the GUI.
(8) The information processing apparatus according to any one of (3) to (7), in which the video generation unit moves the cursor on a UI plane arranged in the virtual space in a case where the cursor is not on a plane of the GUI.
(9) The information processing apparatus according to (8), in which in a case where the cursor enters a region connecting a viewpoint position of a user and the 3D object, the video generation unit moves the cursor from the UI plane onto a plane of the GUI in the virtual space.
(10) The information processing apparatus according to (8) or (9), in which a video generated by the video generation unit includes another GUI arranged on the UI plane in the virtual space.
(11) The information processing apparatus according to (3), in which the video generation unit colors a plane of the GUI under the cursor.
(12) The information processing apparatus according to any one of (1) to (11), in which the GUI includes at least three planes sharing two sides with other planes.
(13) The information processing apparatus according to any one of (1) to (11), in which the GUI has a substantially box-like shape surrounded by six planes.
(14) The information processing apparatus according to any one of (1) to (13), in which the video generation unit cuts out a portion of the 3D object included in a region on an inner side of the GUI.
(15) The information processing apparatus according to any one of (1) to (13), in which the video generation unit cuts out a portion of the 3D object included in a region on an outer side of the GUI.
(16) The information processing apparatus according to any one of (1) to (15), in which the video generation unit generates a video in which a cross-sectional portion of the 3D object along a plane of the GUI is highlighted.
(17) The information processing apparatus according to any one of (1) to (16), in which the video generation unit generates a stereoscopic video by binocular parallax.
(18) The information processing apparatus according to any one of (1) to (17), in which the video generation unit generates a video on the basis of tracking of a viewpoint position of the user.
(19) An information processing system including an information processing apparatus including a video generation unit that generates a video including a 3D object and a GUI having at least three planes arranged in a virtual space, the video including the 3D object in which one portion is cut out along a plane of the GUI in a case where the 3D object and the GUI overlap in the virtual space; and
   a display device that is connected to the information processing apparatus and includes a display unit that displays a video generated by the video generation unit.
(20) A program that causes a computer to execute a process of:
   generating a video including a 3D object and a GUI having at least three planes arranged in a virtual space, the video including the 3D object in which one portion is cut out along a plane of the GUI in a case where the 3D object and the GUI overlap in the virtual space.
(21) The information processing apparatus according to (18), in which the video generation unit generates a video by perspective projecting the 3D object and the GUI on the basis of the viewpoint position.

### REFERENCE SIGNS LIST

- 1: Information processing apparatus
- 11: Display control unit
- 12: Display unit
- 13: Sensor unit
- 14: Input unit
- 15: Storage unit

## Claims

1. An information processing apparatus comprising a video generation unit configured to generate a video including a 3D object and a GUI having at least three planes arranged in a virtual space, the video including the 3D object in which one portion is cut out along a plane of the GUI in a case where the 3D object and the GUI overlap in the virtual space.

2. The information processing apparatus according to claim 1, wherein the video generation unit changes at least one of a position, a direction, or a shape of the GUI on a basis of an input operation in a two-dimensional direction.

3. The information processing apparatus according to claim 1, wherein in a case where a cursor is on a plane of the GUI, the video generation unit moves the cursor on the plane of the GUI.

4. The information processing apparatus according to claim 3, wherein the video generation unit moves the GUI on a plane corresponding to one plane of the GUI in response to an operation of moving the cursor in a state where the one plane of the GUI is selected.

5. The information processing apparatus according to claim 3, wherein the video generation unit rotates the GUI on a plane corresponding to one plane of the GUI in response to an operation of moving the cursor in a state where the one plane of the GUI is selected.

6. The information processing apparatus according to claim 3, wherein the video generation unit changes the size of the GUI according to a predetermined operation in a state where the cursor is on a plane of the GUI.

7. The information processing apparatus according to claim 3, wherein the video generation unit deforms the GUI according to a predetermined operation in a state where the cursor is on a plane of the GUI.

8. The information processing apparatus according to claim 3, wherein the video generation unit moves the cursor on a UI plane arranged in the virtual space in a case where the cursor is not on a plane of the GUI.

9. The information processing apparatus according to claim 8, wherein in a case where the cursor enters a region connecting a viewpoint position of a user and the 3D object, the video generation unit moves the cursor from the UI plane onto a plane of the GUI in the virtual space.

10. The information processing apparatus according to claim 8, wherein a video generated by the video generation unit includes another GUI arranged on the UI plane in the virtual space.

11. The information processing apparatus according to claim 3, wherein the video generation unit colors a plane of the GUI under the cursor.

12. The information processing apparatus according to claim 1, wherein the GUI includes at least three planes sharing two sides with other planes.

13. The information processing apparatus according to claim 1, wherein the GUI has a substantially box-like shape surrounded by six planes.

14. The information processing apparatus according to claim 1, wherein the video generation unit cuts out a portion of the 3D object included in a region on an inner side of the GUI.

15. The information processing apparatus according to claim 1, wherein the video generation unit cuts out a portion of the 3D object included in a region on an outer side of the GUI.

16. The information processing apparatus according to claim 1, wherein the video generation unit generates a video in which a cross-sectional portion of the 3D object along a plane of the GUI is highlighted.

17. The information processing apparatus according to claim 1, wherein the video generation unit generates a stereoscopic video by binocular parallax.

18. The information processing apparatus according to claim 1, wherein the video generation unit generates a video on a basis of tracking of a viewpoint position of the user.

19. An information processing system comprising:
an information processing apparatus including a video generation unit that generates a video including a 3D object and a GUI having at least three planes arranged in a virtual space, the video including the 3D object in which one portion is cut out along a plane of the GUI in a case where the 3D object and the GUI overlap in the virtual space; and
a display device that is connected to the information processing apparatus and includes a display unit that displays a video generated by the video generation unit.

20. A program that causes a computer to execute a process of:
generating a video including a 3D object and a GUI having at least three planes arranged in a virtual space, the video including the 3D object in which one portion is cut out along a plane of the GUI in a case where the 3D object and the GUI overlap in the virtual space.
